# EUROPEAN PATENT APPLICATION

(11) **EP 4 791 105 A1**
(43) Date of publication of application: **12.08.2026**
(21) Application number: 25156295.5
(22) Date of filing: 06.02.2025
(51) Int. Cl.: H04W 74/00, H04W 74/0833, H04W 72/23, H04L 5/00

(54) **COMMUNICATION APPARATUS, BASE STATION, AND METHODS**

(71) Applicant: Panasonic Intellectual Property Corporation of America, Torrance, CA 90504 (US)
(72) Inventor: KURUVATTI, Nandish, 63225 Langen (DE); LI, Hongchao, 63225 Langen (DE); HORIUCHI, Ayako, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

Provided is a communication apparatus, comprising a transceiver which, in operation, receives an indication regarding adaptation of resources for a physical random access channel, PRACH, wherein the indication indicates whether or not a paging downlink control information, DCI, indicates one or more PRACH adaptation parameters, and/or an information portion of the paging DCI, the information portion indicating the one or more PRACH adaptation parameters; and receives the paging DCI. The communication apparatus further comprises circuitry which, in operation, if the paging DCI indicates the one or more PRACH adaptation parameters, determines the one or more PRACH adaptation parameters based on the indication, and determines resource occasions of the PRACH based on the one or more PRACH adaptation parameters. The transceiver, in operation, performs transmission, reception, and/or monitoring of the PRACH on the determined resource occasions.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

Currently, the 3rd Generation Partnership Project (3GPP) works at the technical specifications for the new radio access technology-5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

For systems like LTE, LTE-A, and NR, further modifications and options may facilitate efficient operation of the communication system as well as particular devices pertaining to the system.

### SUMMARY

One non-limiting and exemplary embodiment facilitates providing apparatuses and methods to perform improved common channel resource adaptation, e.g. improved PRACH resource adaptation.

In an embodiment, the techniques disclosed here feature a communication apparatus, comprising a transceiver which, in operation, receives an indication regarding adaptation of resources for a physical random access channel, PRACH, wherein the indication indicates (i) whether or not a paging downlink control information, DCI, indicates one or more PRACH adaptation parameters, and/or (ii) an information portion of the paging DCI, the information portion indicating the one or more PRACH adaptation parameters; and receives the paging DCI; and circuitry which, in operation, if the paging DCI indicates the one or more PRACH adaptation parameters, determines the one or more PRACH adaptation parameters based on the indication, and determines resource occasions of the PRACH based on the one or more PRACH adaptation parameters, wherein the transceiver, in operation, performs transmission, reception, and/or monitoring of the PRACH on the determined resource occasions.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates a configuration of legacy and additional PRACH resources;
- **Fig. 3**: illustrates a distribution of legacy and additional PRACH resources in time domain.
- **Fig. 4**: is a block diagram of a communication system in accordance with exemplary embodiments of the present disclosure;
- **Fig. 5**: illustrates the steps of a method for a communication apparatus in accordance with exemplary embodiments of the present disclosure;
- **Fig. 6**: illustrates the steps of a method for a base station in accordance with exemplary embodiments of the present disclosure;
- **Fig. 7**: illustrates the steps of a method for a communication apparatus according to a first embodiment;
- **Fig. 8**: illustrates the steps of a method for a communication apparatus according to a second embodiment;
- **Fig. 9**: illustrates the steps of a method for a communication apparatus according to a fourth embodiment;
- **Fig. 10**: illustrates the steps of a method for a communication apparatus according to a fifth embodiment;
- **Fig. 11**: illustrates the steps of a method for a communication apparatus according to a first variation of a seventh embodiment;
- **Fig. 12**: illustrates the steps of a method for a communication apparatus according to a second variation of the seventh embodiment; and
- **Fig. 13**: shows exemplary functional split options in 5G O-RAN.

### DETAILED DESCRIPTION

### 5G NR system architecture and protocol stacks

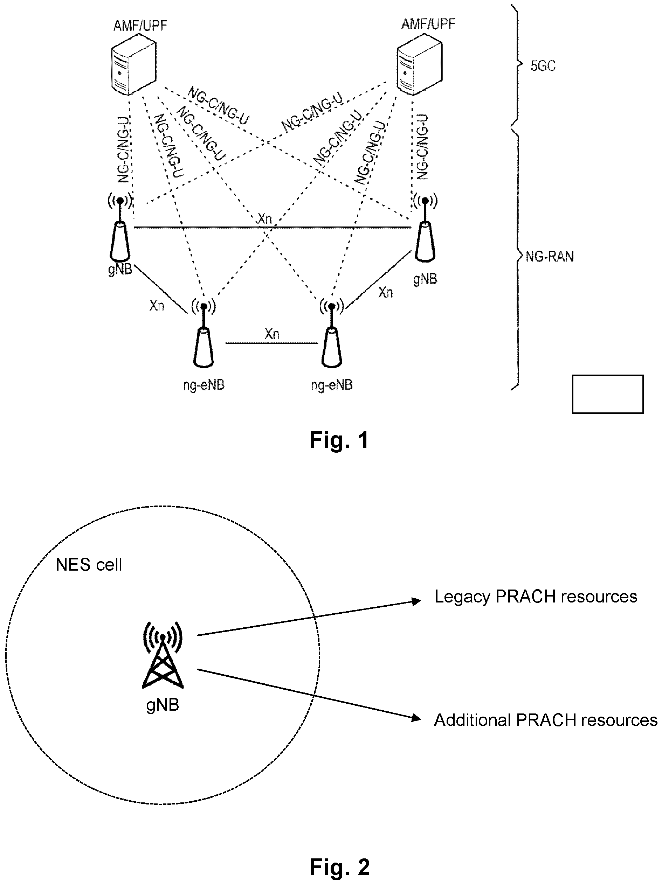

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.0.0, section 4).

### Network energy saving

In telecommunications networks, network energy saving (NES) has been identified as an important issue with regard to environmental sustainability, to reduce environmental impact (greenhouse gas emissions), and for operational cost savings. In 3GPP 5G Release 19, work items for NES have been formulated including the following four features (see e.g. RP-234065, "New WID: Enhancements of network energy savings for NR", section 4).

Firstly, procedures and signaling method(s) are to be specified to support on-demand SSB (synchronization signal block) SCell (Secondary cell) operation for UEs (user equipments) in connected mode configured with carrier aggregation (CA), for both intra-/inter-band CA. This includes selection of triggering method(s) such as UE uplink wake-up-signal using an existing signal/channel, cell on/off indication via backhaul, and SCell activation/deactivation signaling. It is noted that on-demand SSB transmission can be used by UE for at least SCell time/frequency synchronization, L1/L3 (layer 1 / layer3) measurements and SCell activation, and is supported for FR1 (frequency range 1, including sub-6 GHz frequency bands) and FR2 (including frequency bands from 24.25 GHz to 71.0 GHz) in non-shared spectrum.

Secondly, procedures and signaling method(s) are to be studied to support on-demand SIB1 (system information block 1) for UEs in idle/inactive mode. This includes triggering method by uplink wake-up-signal using an existing signal/channel, wake-up-signal configuration provisioning to UE, and information exchange between gNBs at least for the configuration of wake-up signal, if necessary.

Thirdly, adaptation of common signal/channel transmissions is to be specified, including adaptation of SSB in time domain, e.g. adapting periodicity, and adaptation of PRACH (physical random access channel) in time domain (a further issue for study and possible specification is adaptation of PRACH in spatial domain, e.g. non-uniform PRACH resources per SSB), and adaptation of paging occasions including confining the paging occasions in the time domain. Therein, it is desirable to have no negative impact to legacy UEs, unless significant benefits are shown.

Fourthly, the corresponding core requirements for the above features are to be specified.

### PRACH adaptation in time domain

In the following, adaptation of PRACH in time domain will be discussed as an example of the common channel adaptation. It is noted that although details issues regarding common channel adaptation are exemplified for PRACH, the present disclosure may generally relate to common channel adaptation, including other common channels, such as paging, or SSB (synchronization signal block).

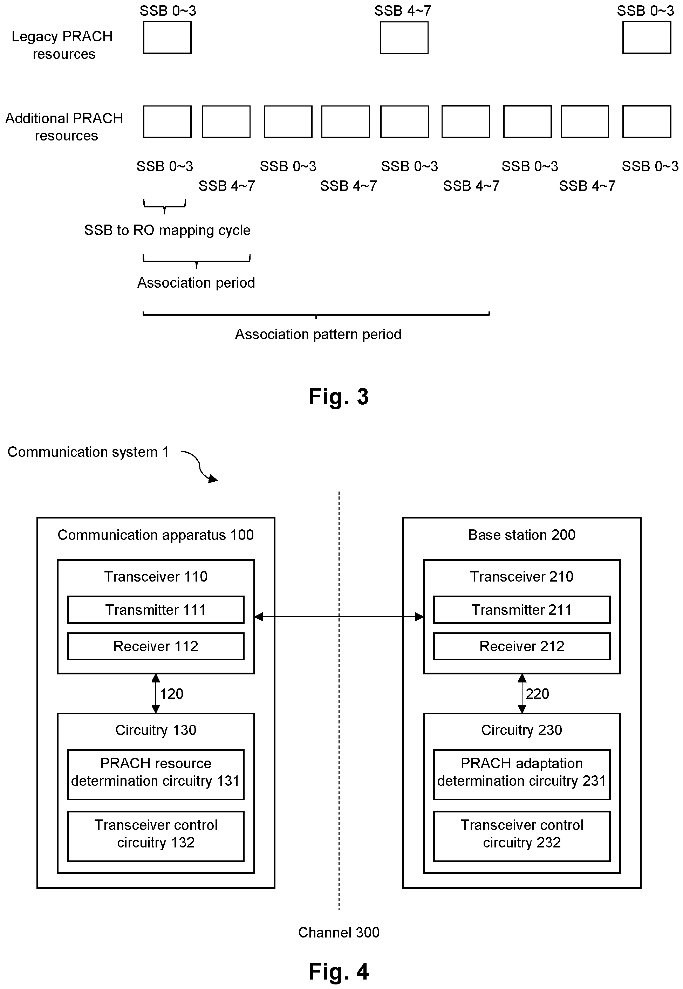

As mentioned above, in 3GPP 5G Release 19, PRACH adaptation in time domain is being considered. For instance, a gNB may have legacy PRACH resources and additional PRACH resources configured. As shown in **Fig. 2**, legacy UEs of releases prior to Release 19 can use legacy PRACH resources, and Rel. 19 UEs can use both legacy resources and additional PRACH resources. In a case where legacy PRACH resources are sparsely present in time domain, time domain adaptation of PRACH can be carried out for the NES UEs on the additional PRACH resources, in accordance with the requirements of the gNB. An example of a configuration of legacy and additional PRACH resources in time domain is illustrated in **Fig. 3****.**

SSB-to-RO mapping refers to an association between Synchronization Signal Blocks (SSB) and PRACH resource occasions (ROs). Since in beamforming scenarios, each SSB is associated with a spatial direction or beam (or pair of transmission and reception beam), the SSB-to-RO mapping facilitates for the gNB to identify which beam a UE using a given RO is using. In the example depicted in **Fig. 3**, each RO is mapped to a group of four SSBs corresponding to four beams ("SSB 0-3" or "SSB 4~7", the same notation is also used in other figures of the present disclosure) out of eight SSBs with indices 0 to 7. The SSB-to-RO mapping cycle is determined by the number of SSBs mapped to a RO, which is for SSBs in the example of **Fig. 3****.** However, other SSB-to-RO mapping, such as a one-to-one mapping between SSBs and ROs, are also possible.

As association period is a period where a configured number of SS/PBSCH blocks (Synchronization Signal / Physical Broadcast Channel blocks) are mapped at least once to PRACH occasions within the mapping cycle. SS/PBCH is a downlink transmission used by the UE in the cell search procedure, including the Primary Synchronization Signal, the Secondary Synchronization Signal, and the Physical Broadcast Channel. An association pattern period includes one or more association periods and is determined so that a pattern between PRACH occasions and SS/PBCH blocks repeats at most every 160 msec (see 3GPP TS 38.213, Physical layer procedures for control, V18.3.0 (2024-06), section 8.1 "Random access preamble", for a definition of association period and association pattern period).

It is noted that PRACH occasions not associated with SS/PBCH blocks after an integer number of association periods, if any, are not used for PRACH transmissions.

Regarding overlap between additional PRACH resources for NES-capable Rel. 19 UEs and legacy PRACH resources, the following cases may be supported (it is noted that the functionality in the disclosure for Rel. 19 refers to Releases from Rel. 19 onwards, including future releases):
- Case 1: There is no-domain overlap between the additional PRACH resources for NES-capable UEs and the PRACH resources for legacy UEs.
- Case 2: There is time-overlap but no overlap in frequency domain between the additional PRACH resources for NES-capable UEs and the PRACH resources for legacy UEs
- Case 3: additional PRACH resources for NES-capable UEs and legacy PRACH resources overlap neither in time nor frequency domains

Possibly, an additional case may be supported where a full or partial overlap in both time and frequency may be allowed. It is noted further that the above description of cases does not preclude a discussion for the case where the configuration for additional PRACH resources contains legacy PRACH resources. In such a case, additional PRACH resources and legacy resources may have the same configuration, which may include e.g. the configuration index, time and frequency resource space, and other PRACH configuration parameters being the same.

For the adaptation of PRACH in time domain, the additional PRACH resources may be configured based on at least a PRACH configuration index. The PRACH configuration index defines a pointer to a row within lookup table as specified e.g. by 3GPP TS 38.211, see e.g. 3GPP TS 38.211, Physical channels and modulation, V18.3.0 (2024-06), section 6.3.3.2 "Mapping to physical resources and Tables 6.3.3.2-2 to 6.2.2.3-4. Thereby, the PRACH configuration index specifies parameters including time and frequency resources in terms of radio frames (whether PRACH occasions exist in even or odd radio frames), subframe number, number of PRACH slots within subframe, time domain PRACH occasions within PRACH slot, and PRACH duration in symbols, as well as preamble format.

For the adaptation mechanism for the additional PRACH resources for NES capable Rel. 19 UEs, PRACH resource adaptation may be based on higher-layer signalling. A second option is layer 1 (L1, physical layer) based adaptation to indicate whether additional PRACH resources provided by semi-static signalling are available or not, possibly re-using existing DCI (downlink control information) formats. For example, for DCI-based adaptation for additional PRACH resources, at least DCI format 1_0 may carry an adaptation indication for UEs in idle/inactive and connected mode.

Table 1 illustrates fields of a DCI format 1_0 with CRC (Cyclic Redundancy Check) scrambled by P-RNTI (Paging Radio Network Temporary Identifier). This DCI format is used for paging and notification, e.g. for SI modification purposes. DCI is transmitted on the Physical Downlink Control Channel (PDCCH) and carries scheduling assignments for data transmission or uplink grants. To ensure integrity and enable recipient-specific identification, a CRC is appended to the DCI payload. This CRC is then scrambled with a P-RNTI, which serves different purposes depending on the context, such as paging (P-RNTI).

**Table 1: Certain fields of DCI format 1_0 with CRC scrambled with P-RNTI**

| Field name | Number of bits | Note |
|---|---|---|
| Short message | 2 | 00: reserved |
| indicator | | 01: paging, TRS availability indication |
| | | 10: short message, TRS availability indication |
| | | 11: paging, short message, TRS availability indication |
| Short message | 8 | 4 bits are unused |
| | | Bits (5, 6, 7, 8) are available |
| | | First 4 bits are used as below: |
| | | Bit 1:systemlnfoModification |
| | | Bit 2: etwsAndCmasIndication |
| | | Bit 3: stopPagingMonitoring |
| | | Bit 4: systemInfoModification-eDRX |
| TRS availability indication | 6 (maximum) | 1 to 6 bits, if trs-ResourceSetConfig is configured 0, otherwise |
| Reserved bits | 8-M | (8-M) for shared spectrum access in FR1 and FR2 (NR-U) |
| | or | (6-M) for non-shared spectrum access |
| | 6-M | M is the number of bits in field TRS availability indication |

As illustrated in Table 1, the DCI format 1_0 includes the fields "short message indicator", "short message", "TRS availability indication" and "reserved bits". It is to be noted that the DCI format 1_0 further includes other fields as the ones illustrated in Table 1. Said other fields include a frequency domain resource assignment field, a time domain resource assignment field, a VRB-to-PRB mapping field, a modulation and coding scheme field, and a TB scaling field. Details can be found, for instance, in 3GPP TS 38.212 v18.5.0 "3rd Generation Partnership Project; Technical Specification Group Radio Access Network; NR; Multiplexing and channel coding (Release 18)", in particular section 7.3.1.2.1.

The short message indicator in DCI 1_0 is a 2-bit field that indicates whether a system information or paging message is present in the associated PDSCH transmission. It is used when the CRC is scrambled by P-RNTI. The network sets the short message indicator based on whether a short message is scheduled. The UE decodes the DCI, extracts the short message indicator, and determines if it should attempt the short message field. Implementation-wise, the short message indicator is encoded within the DCI payload before CRC attachment and scrambling. The UE retrieves it after successful PDCCH decoding and uses it to decide further reception steps.

Short messages can be transmitted on PDCCH using P-RNTI with or without associated paging message using the short message field in DCI format 1_0. Bit 1, if set to 1, indicates System Information modification. Bit 2, if set to 1, indicates ETWS (primary and/or secondary) notification and/or a CMAS notification. Bit 3, if set to 1, indicates that the UE should stop monitoring the paging channel for a certain period. Bit 4, if set to 1, indicates change in the eDRX parameters (extended discontinuous reception), which control how often the UE wakes up to check for paging messages and other control information. Bits 5-8 are unused.

In 5G, the Tracking Reference Signal (TRS) is used for channel estimation and tracking, particularly in high-mobility scenarios. It may help a UE to correct frequency and time variations caused by Doppler shift and phase noise. Unlike LTE, where the Cell-specific Reference Signal (CRS) is always present in every subframe, TRS in 5G is transmitted only when needed. This makes the system more efficient by reducing overhead. The TRS availability indication in DCI format 1_0 informs the UE whether TRS is present in the scheduled PDSCH transmission. If trs-ResourceSetConfig is configured, the field includes at most 6 bits. Otherwise, the field does not include any bits. That is, the field is of variable bit size, and may include zero or up to 6 bits at maximum.

The remaining bits in the reserved bits field may include 8-M or 6-M reserved bits. Here, M is the number of bits of the TRS availability indication field. For shared spectrum access in FR1 and FR2 (frequency range 1 and frequency range 2) in NR-U (New Radio-Unlicensed), the number of reserved bits is 8-M, whereas for non-shared spectrum access, the number of reserved bits is 6-M. That is, the number of reserved bits is variable, depending on the TRS configuration, and may be zero up to 8 bits.

### System Information Block (SIB)

In cellular communication systems such as those based on the 5G New Radio (NR) standard specified by the 3rd Generation Partnership Project (3GPP), a user equipment (UE) must acquire system information from the network to perform initial access, cell reselection, handover, and other essential operations. This system information is provided through broadcast control signalling in the form of System Information Blocks (SIBs). The organization and transmission of SIBs in 5G NR differ from previous generations such as LTE and UMTS, offering greater flexibility in scheduling, improved spectral efficiency, and reduced UE power consumption.

System information in 5G NR is categorized into two groups: Minimum System Information (MSI) and Other System Information (OSI). Minimum System Information (MSI) includes the Master Information Block (MIB) and System Information Block Type 1 (SIB1). These provide fundamental parameters required for cell access and initial configuration.

The MIB is transmitted over the Physical Broadcast Channel (PBCH) and carries basic system parameters such as the system frame number, subcarrier spacing, etc. SIB1 is transmitted using the Physical Downlink Shared Channel (PDSCH) with scheduling information provided in DCI Format 1_0 within the PDCCH. It may include, among others, PLMN (Public Land Mobile Network) identity, Tracking Area Code (TAC), Cell selection parameters (e.g., Qrxlevmin, Qqualmin, S_intraSearch, S_nonlntraSearch), etc.

Other System Information (OSI) consists of additional SIBs (SIB2-SIBx) that provide detailed parameters for mobility management, access control, radio resource configuration, and emergency alerts. These may be broadcast periodically or delivered on demand via a System Information Request (SI request) in connected mode.

### Further Improvements

In view of the above, the inventors have identified issues to be considered in scenarios where adaptation of additional PRACH resources (e.g. additional resources for Rel. 19 UEs in addition to the legacy resources, as mentioned above) is to be carried out. In particular, an issue is how to indicate the presence of additional PRACH resources and respective adaptations to the UE, and how and by which indication a certain DCI actually indicates the additional PRACH resources.

### Embodiments

In view of the above, the present disclosure provides techniques related to indication of PRACH adaptation.

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a mobile station or mobile node or user terminal or user equipment (UE) or communication apparatus is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term base station or radio base station or scheduling apparatus here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

An example of a communication system 1 is illustrated in **Fig. 4****.** The communication system 1 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 4** illustrates a general, simplified and exemplary block diagram of a communication apparatus 100 (which may be exemplarily assumed to be a user equipment (UE) or communication terminal) and a base station 200 or scheduling device or scheduling node (which may be exemplarily assumed to be located in a network node, e.g. in an LTE eNB (alternatively termed ng-eNB) or the gNB in 5G NR) in the communication system 1. However, in general, a base station 200 may also refer to a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 100 may also be a sensor device, a wearable device, or a connected vehicle, or a controller of an automated machine in an industrial factory.

As illustrated in **Fig. 4****,** the communication apparatus 100 and the base station 200 or network node (eNB/gNB) may communicate with each other over a (wireless) physical channel 300 respectively using their transceivers 110 (communication apparatus side) and 210 (base station side). Together, the base station 200 and the communication apparatus 100 may form the communication system 1. The communication system 1 may further include other entities such as those shown in **Fig. 1**, e.g. a plurality of UEs connected to the base station 200 or a relay node relaying signals to/from the base station from/to one or more UEs, or a plurality of base stations each serving in one or more serving cells.

As illustrated in **Fig. 4**, the communication apparatus 100 may comprise a transceiver 110 (e.g. including a transmitter 111 and/or a receiver 112) and circuitry 130 (or processing and/or control circuitry), and the base station 200 may comprise a transceiver 210 (e.g. including a transmitter 211 and/or a receiver 212) and (processing and/or control) circuitry 230.

The term transceiver refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term transceiver is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term circuitry herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver 110, 210 and the processing circuitry 130, 230 there may be an input/output point (or node) over which the processing circuitry 130, 230, in operation, can control the transceiver 110, 210, i.e. control the receiver and/or the transmitter and exchange reception/transmission data. The processing circuitry 130, 230 may implement control tasks such as controlling the transceiver 110, 210 to transmit user data and control data provided by the processing circuitry 130, 230 and/or receive user data and control data, which is further processed by the processing circuitry 130, 230. The processing circuitry 130, 230 may also be responsible for performing other processes such as determining, deciding, calculating, measuring, etc.

In the exemplary communication apparatus 100, the circuitry 130 may control the transceiver 120, which may include the transmitter 111 and the receiver 112, to receive and/or transmit data. This may be performed by a transceiver control circuitry 132 included in the circuitry 130. This is illustrated by an arrow 120 which represents schematically an interface between the circuitry 130 and the transceiver 110, over which the control is performed.

In the exemplary base station 200, the circuitry 230 may control the transceiver 210 to receive and/or transmit data. This may be performed by a transceiver control circuitry 232 included in the circuitry 230. This is illustrated by an arrow 220, which represents schematically an interface between the circuitry 230 and the transceiver 210, over which the control is performed. For example, the circuitry 230 may instruct the transceiver 210 to transmit data.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 100 and a base station 200, without implying any limitation to networks such as 3GPP NR networks.

In the communication apparatus 100 provided by the present disclosure, shown in **Fig. 4** (lefthand side), the transceiver 110, in operation, receives an indication regarding adaptation of resources for a physical random access channel, PRACH, wherein the indication indicates (i) whether or not a paging downlink control information, DCI, indicates one or more PRACH adaptation parameters, and/or (ii) an information portion of the paging DCI, the information portion indicating the one or more PRACH adaptation parameters; and receives the paging DCI. Further, the circuitry 130, in operation, if the paging DCI indicates the one or more PRACH adaptation parameters, determines the one or more PRACH adaptation parameters based on the indication, and determines resource occasions of the PRACH based on the one or more PRACH adaptation parameters. Further, the transceiver 110, performs transmission, reception, and/or monitoring of the PRACH on the determined resource occasions.

In the base station 200 provided by the present disclosure, shown in **Fig. 4** (right-hand side, the circuitry 230, in operation, determines adaptation of resources for a physical random access channel, PRACH. The transceiver 210, in operation transmits an indication regarding adaptation of the resources for the PRACH, wherein the indication indicates (i) whether or not a paging downlink control information, DCI, indicates one or more PRACH adaptation parameters, and/or an information portion of the paging DCI, the information portion indicating the one or more PRACH adaptation parameters, and transmits the paging DCI.

In **Fig. 4**, the UE circuitry 130 is exemplarily considered to comprise, further to the transceiver control circuitry 132 mentioned above, PRACH resource determination circuitry 131, which, in operation, determines the valid resource occasions for the PRACH based on the received indication. Said PRACH resource determination circuitry 131 may also be responsible for processing or evaluating the received signaling (PDCCH and/or SIB) and obtain therefrom the adaptation parameters, as well as for determining valid resources for the transmission, reception, and/or monitoring to be performed.

The base station circuitry 230 is exemplarily considered to comprise, further to the transceiver control circuitry 232 mentioned above, PRACH adaptation determination circuitry 231, which, in operation, determines adaptation of resources for a physical random access channel, PRACH. Said PRACH adaptation determination circuitry 231 may be responsible for determining the adapted values of the parameters regarding the common channel, as well as for writing the adaptation parameters for the common channel into the SIB and/or PDCCH that conveys the adaptation parameters.

It is, however, noted that the communication apparatus circuitries 130, 131, and 132 as well as the base station circuitries 230, 231, and 232 may implement more functionality than the above-mentioned, and the functionalities mentioned above are in general implemented by circuitries 130 and 230 without being limited to comprising the respective circuitries 131, 132 and 231, 232 described above.

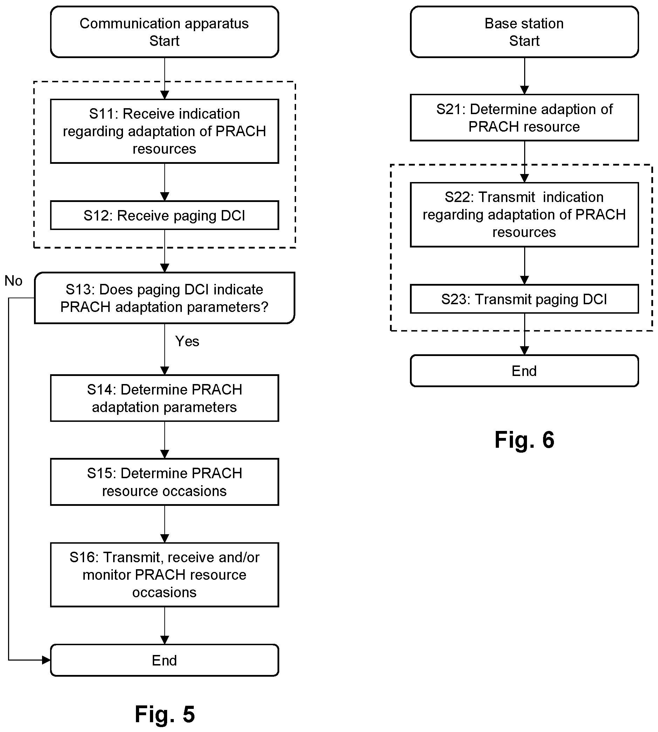

In correspondence with the above-described communication apparatus 100, a method for a communication apparatus 100 is provided. As shown in **Fig. 5**, the method comprises receiving an indication regarding adaptation of resources for a physical random access channel, PRACH in step S11. The indication indicates (i) whether or not a paging downlink control information, DCI, indicates one or more PRACH adaptation parameters, and/or (ii) an information portion of the paging DCI, the information portion indicating the one or more PRACH adaptation parameters. The method further comprises receiving the paging DCI in step S12. It is to be noted that the indication may be included in the DCI and, accordingly, steps S11 and S12 may be realized by a single step of receiving a paging DCI including the indication, as illustrated by the dashed rectangle. If the paging DCI indicates the one or more PRACH adaptation parameters (Yes in step S13), the one or more PRACH adaptation parameters are determined based on the indication in step S14. Further, in step S15, the PRACH resource occasions are determined based on the one or more PRACH adaptation parameters. In step S16, the PRACH is transmitted, received and/or monitored on the determined resource occasions. If the paging DCI does not indicate the one or more PRACH adaptation parameters (No in step S13), the method ends.

Furthermore, in correspondence with the above-described base station 200, a method to be performed by a base station 200 is provided. As shown in **Fig. 6**, the method comprises determining adaptation of resources for a physical random access channel, PRACH in step S21. Further, in step S22 an indication regarding adaptation of the resources for the PRACH is transmitted. The indication indicates (i) whether or not a paging downlink control information, DCI, indicates one or more PRACH adaptation parameters, and/or (ii) an information portion of the paging DCI, the information portion indicating the one or more PRACH adaptation parameters. Further, in step S23, the paging DCI is transmitted. It is to be noted that, as already mentioned above, the indication regarding adaptation of the resources for the PRACH may be included in the paging DCI. Accordingly, steps S22 and S23 may be implemented as a single step, wherein the paging DCI including the notification is transmitted.

In the generic description of the communication apparatus 100, the base station 200, and respective methods above, as well as in the following, the indication regarding adaptation of resources for a physical random access channel, PRACH, may be any indication that indicates whether or not a paging DCI indicates the one or more PRACH adaptation parameters. In other words, when the communication apparatus 100 receives the indication, it may determine whether the DCI indicates the PRACH adaptation parameters. The indication may be, for example, one or more bits, wherein the bit value indicates presence or absence of the indication of the PRACH adaptation parameters in the paging DCI.

When the paging DCI indicates the one or more PRACH adaptation parameters, said parameters may be carried by the paging DCI or may be indicated by the paging DCI. The indication may be implemented as a pointer to/an index of one of a plurality of sets of PRACH adaptation parameters. Said sets of PRACH adaptation parameters may be pre-obtained by the communication apparatus 100, pre-configured, defined in a standard, or the like.

Further, the indication may indicate an information portion of the DCI that indicates the one or more PRACH adaptation parameters. In other words, based on the indication, the communication apparatus 100 may determine which portion of the paging DCI carries an indication indicating the one or more PRACH adaptation parameters. The portion (information portion) may be a certain bit position and length of said paging DCI. That is, the indication may provide the communication apparatus 100 with sufficient information to determine which section of the paging DCI carries an indication of the one or more PRACH adaptation parameters.

It is to be noted that the indication regarding adaptation of resources for the PRACH may indicate both whether or not the paging DCI indicates the PRACH adaptation parameters and the information portion of the paging DCI, where the indication of the PRACH adaptation parameters may be found. For example, a certain value of the indication may indicate that there is no PRACH adaptation parameter indication included in the paging DCI. A different value of the indication may indicate that there is a PRACH adaptation parameter indication included in a certain portion of the paging DCI.

Specific implementation examples of these concepts are given in the detailed description of embodiments 1 to 11.

Further, it is to be noted that the communication apparatus 100 may receive the notification regarding the adaptation of resources for the PRACH separate from the paging DCI or as a part of the paging DCI.

If the paging DCI indicates the one or more PRACH adaptation parameters, that is, if the circuitry 130 determines that the paging DCI includes an indication of the one or more PRACH adaptation parameters, it may determine said parameters based on the indication. In a case where the notification only indicates the presence of the PRACH adaptation parameter indication, respective information portion may be pre-determined, pre-obtained, configured, signaled, or the like. However, the notification may indicate a certain information portion of the paging DCI, from which the PRACH adaptation parameter indication may be obtained. Accordingly, the circuitry 130 may obtain the PRACH adaptation parameter indication from the received paging DCI and, based thereon, determine respective PRACH adaptation parameters.

For example, the paging DCI may carry the PRACH adaptation parameters itself, or include an indication of said parameters in a sense that it is indicated to the communication apparatus 100 which PRACH adaptation parameters are to be used. For example, the PRACH adaptation indication may be a pointer into a set of pre-determined, pre-obtained, configured, or the like PRACH adaptation parameters. Based on the PRACH adaptation parameters, the communication apparatus 100 may determine the resource occasions of the PRACH, and transmit, receive, or monitor the PRACH on the determined resource occasions.

As already described further above, the transceiver 110, in operation, may receive the indication separate from the paging DCI or as a part of the paging DCI. For example, the indication may be received via the paging DCI or via a system information block, SIB.

System Information Blocks (SIBs) are structured messages, e.g. in LTE and 5G NR, that carry system information for UEs to access and operate within a network. Each SIB contains specific parameters related to network configuration, mobility, radio resource management, and access restrictions. SIBs are transmitted in the Broadcast Control Channel (BCCH). Exemplary SIBs include SIB1, which contains cell access information, PLMN identities, and scheduling for other SIBs. Other SIBs like SIB2 or SIB3 to SIB8 may define radio resource configuration (e.g., power control, timers) or handle mobility, neighbor cell info, and inter-frequency measurements. The notification may be carried, for example, by SIB1. However, the present disclosure is not limited thereto, and any other SIB may carry the notification.

Critical system information, like SIB1, is broadcast periodically and mapped to specific SSB occasions to ensure UEs can easily receive it. Other SIBs, such as those containing mobility or cell reselection parameters, may be transmitted less frequently to optimize radio resource usage.

The periodicity is defined in terms of radio frames, and the network can configure it dynamically based on factors like network load and UE requirements. This helps balance signaling efficiency and power consumption.

When the indication is included and received via SIB, it is to be noted that, since different SIBs have different periodicities based on their importance and how frequently UEs need them, the communication apparatus 100 may utilize the indication as included in the most recent SIB received. In other words, a SIB may indicate that the paging DCI includes the indication. Subsequently, a received paging DCI is considered to include said indication. However, when a SIB received thereafter indicates that the paging DCI does not include the indication of the PRACH parameters, a paging DCI received after reception of said SIB may be considered not to carry the indication of the PRACH adaptation parameters.

When the notification is included as a part of the paging DCI, the indication may be included in a short message indicator field of the paging DCI.

For example, as described with reference to table 1, a bit value of 00 of the short message indicator field may indicate that the notification regarding the PRACH adaptation is included in the (same) paging DCI. In addition, said value may indicate that the PRACH resource adaptation indication is included in a certain information portion, like the short message field or the reserved bits. However, the present disclosure is not limited thereto, and a different bit value/different bit values may indicate that the paging DCI indicates the one or more PRACH adaptation parameter.

In embodiments, the indication may include a first indication and a second indication. In other words, the indication may consist of or comprise two portions. One of said portions (first indication) may indicate that the paging DCI indicates the one or more PRACH adaptation parameters and/or the information portion that indicates the one or more PRACH adaptation parameters, whereas the other of said portions (i.e. second indication) may indicate paging.

That is, the indication may not only indicate that the PRACH adaptation parameter indication is present in the DCI (i.e. the one or more PRACH adaptation parameters are indicated in the paging DCI), but also that the communication apparatus 100 is paged.

Said first indication may be included in a short message indicator field of the paging DCI (e.g. the bit values of the short message indicator are 00), whereas said second indication may be included in the short message field. For example, bit 4 (which so far is the first unused bit) may indicate paging, depending on its value of 0 or 1. In this case, for example, the PRACH resource adaptation parameters may be indicated by bits 6, 7 and/or 8 of the short message field and/or by any one of or any combination of the bits included in the reserved bits field.

Hence, in embodiments, the indication may indicate (i) that the paging DCI indicates the one or more PRACH adaptation parameters, (ii) that the paging DCI indicates the one or more PRACH adaptation parameters and a short message, (iii) that the paging DCI indicates the one or more PRACH adaptation parameters and paging, or (iv) that the paging DCI indicates the one or more PRACH adaptation parameters, a short message, and paging.

For example, any one of said cases may be indicated by a certain bit value of the bits in the short message indicator field of the paging DCI (e.g. 00).

It is to be noted that the indication that the one or more PRACH adaptation parameters are indicated in the paging DCI (i.e. (i)) may indicate that only said PRACH adaptation parameters are indicated in the DCI, but paging, the TRS availability indicator, and a short message are not indicated in the DCI. Accordingly, case (ii) may indicate that only the one or more PRACH adaptation parameters and a short message are indicated in the paging DCI, but not paging or the TRS availability indicator. Similarly, case (iii) may indicate that only the one or more PRACH adaptation parameters and paging are indicated in the paging DCI, but neither a short message nor the TRS availability indicator. Finally, case (iv) may indicate that the one or more PRACH adaptation parameters, paging, and a short message are indicated in the paging DCI, but no TRS availability indicator

In an embodiment, the indication indicates that the information portion is included in a short message field of the paging DCI, and/or a dedicated field of the paging DCI other than the short message field.

In other words, the indication, which may itself be part of the paging DCI (e.g. transmitted by the short message indicator) or may be transmitted separately, e.g. via SIB, may indicate that the short message field carries an indication of the one or more PRACH adaptation parameters. For example, as illustrated in Table 1, one or more of the currently unused bits may be utilized to indicate the PRACH adaptation parameters. The indication may, in addition or as an alternative to the above, indicate that one or more of the bits of the reserved bits field as illustrated in Table 1 carry the indication of the PRACH adaptation parameters. In this respect, it is to be noted that the reserved bits field is an example of a dedicated field of the paging DCI other than the short message field. The dedicated field of the paging DCI other than the short message field may include the reserved bits available after the TRS availability indication usage in a current specification. As mentioned above, the indication may indicate that the short message field as well as the dedicated field carries the indication of the PRACH adaptation parameters.

Further, the paging DCI may carry no tracking reference signal, TRS, availability indication if the paging DCI indicates at least the one or more PRACH adaptation parameters.

Since the number of reserved bits (see e.g. Table 1) depends on whether or not the TRS availability indication is carried by the paging DCI, the number of available bits to carry the indication of the one or more PRACH adaptation parameters depends on whether or not the TRS availability indication is carried and the trs-ResourceSetConfig. Therefore, for the case of shared spectrum access in FR1 and FR2 (NR-U), if all bits are used by the TRS availability indication, the number of available bits is two. On the other hand, for the case of non-shared spectrum access, the number of available reserved bits may be zero. In view thereof, the TRS availability indication and the indication of the one or more PRACH adaptation parameters are in opposition to each other.

In order to overcome this issue, the paging DCI may not carry the TRS availability indication if it carries an indication of the one or more PRACH adaptation parameters. In other words, the transmission of the TRS availability indication and the indication of the PRACH adaptation parameters may be decoupled from each other in a sense that said indications are not carried by the same paging DCI. In other words, a paging DCI may carry either the TRS availability indication or the indication of the one or more PRACH adaptation parameters.

That is, on the other hand, the paging DCI may carry the TRS availability indication of the indication that the paging DCI does not indicate the one or more PRACH adaptation parameters. In this case, the circuitry 130, in operation, may obtain the TRS availability indication from the paging DCI.

As described above, the communication apparatus 100 may be served by a base station 200 via a network energy saving, NES, cell.

A Network Energy Saving Cell is a network element that reduces energy consumption by switching between active and low-power states based on traffic demand. It coordinates with neighboring cells to maintain coverage and service quality. That is, the base station 200 may be a base station 200 operating in a full-power mode and a reduced-power mode, switching modes based on an energy-saving algorithm.

Further, as detailed above, the paging DCI may be formatted according to a DCI format 1_0 with Cyclic Redundancy Check, CRC, scrambled by Paging Radio Network Temporary Identifier, P-RNTI.

In accordance with the present disclosures, as applies for the communication apparatus 100 and the base station 200 as well as the corresponding methods, "common channel", which may also be called "common signal", refers to a channel or signal, shared by a plurality of or even all UEs within a cell. Examples of common channel, to which the present disclosure is applicable, include SIB(s) (system information block), PRACH (Physical Random Access Channel), paging, or SSB. Thus, although some of the examples provided in this disclosure refer in particular to SIB1, the disclosure and its embodiments are also applicable to one or more of all the common channels. Although some examples provided in the present disclosure are related to PRACH resource adaptation, the present disclosure and its embodiments are also applicable to other common channels.

Furthermore or alternatively, "switching" or "adaptation" of a common channel and/or its resources may refer to the changing of an availability status from OFF (i.e. not available) to ON (i.e. available), or from ON to OFF. Adaptation may also refer to the changing of the common channel configuration, which may include one or more configurations from among the time domain resource (e.g. periodicity), spatial domain resource (e.g. beam indices or transmission configuration indicator (TCI) states), or frequency domain resource.

Determining, transmission and reception of adaptation parameters, as described herein may include determining, transmission and reception of values of adaptation parameters. Furthermore, it may be determined which adaptation parameters are to be adapted and signaled accordingly.

As will be described further, resources for the common channel, to be adapted in accordance with an indication, may include time domain resources at one or more temporal levels of granularity including radio frames, subframes, slots, resource occasions, or symbols, wherein the definition of these time resources may be in accordance with the specifications of 5G NR. In addition, resources for the common channel may include further domains such as frequency domain, spatial direction, code domain, etc.

In the further description, the details and embodiments apply to each of the communication apparatus 100, the base station 200 and the methods unless explicit statement or context indicates otherwise. Moreover, it is noted that any of the steps described below may be included as code instructions in a program, which may be executed by one or more processors (e.g. the processing circuitry 130 and/or the processing circuitry 230).

The above-described general concepts of the present disclosure and further aspects of the disclosure will be described in more detail in the framework of the following embodiments and variations.

### Embodiment 1

In exemplary embodiment 1, a communication apparatus 100, which may be part of a communication system 1 as described above, receives a paging DCI from a base station 200 in a cell/cells configured with TRS and/or additional PRACH resources.

In the embodiment 1, the short message indicator of the paging DCI may indicate the reserved bits in the paging DCI to be used for an indication of the additional PRACH resources, e.g. via the bits of the short message indicator being 00.

If the short message indicator does not carry this value (e.g. 00), the communication apparatus 100 may assume that the paging DCI is being used for TRS availability indication and not for PRACH adaptation.

Upon reception of the paging DCI, the communication apparatus 100 may determine, based on the indication, whether the reserved bits in the paging DCI are to be decoded in order to obtain PRACH adaptation information, namely an indication of the one or more PRACH adaptation parameters.

For example, the communication apparatus 100 may exhibit a configuration as described above in connection with Fig. 4.

The communication apparatus 100 comprises a transceiver 110 which, in operation, receives a paging DCI including an indication regarding adaptation of resources for a physical random access channel, PRACH. The indication is included in a short message indicator field of the paging DCI and indicates whether or not a paging downlink control information, DCI, indicates one or more PRACH adaptation parameters, and, if so, a dedicated field of the paging DCI other than a short message field as an information portion of the paging DCI, the information portion indicating the one or more PRACH adaptation parameters. The circuitry 120, in operation, if the paging DCI indicates the one or more PRACH adaptation parameters, determines the one or more PRACH adaptation parameters based on the indication, and determines resource occasions of the PRACH based on the one or more PRACH adaptation parameters. The transceiver 110, in operation, performs transmission, reception, and/or monitoring of the PRACH on the determined resource occasions.

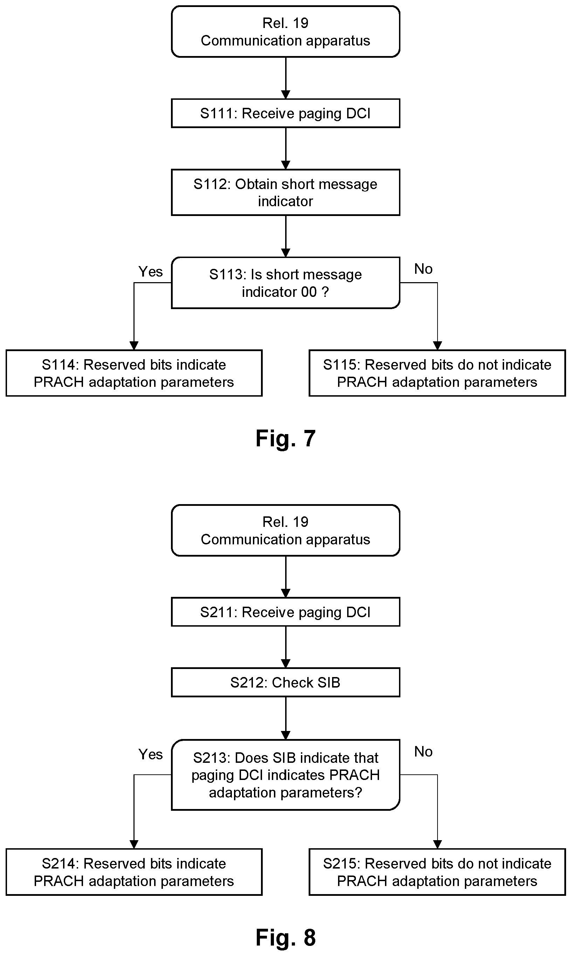

**Fig. 7** illustrates the steps of a method for a communication apparatus according to embodiment 1. In step S111, the communication apparatus 100 receives the paging DCI from the base station 200. Further, the communication apparatus 100 obtains the short message indicator from the paging DCI in step S112 and determines in step S113 whether or not the short message indicator is 00. If the short message indicator is 00 (Yes in step S113), the communication apparatus 100 determines that the reserved bits carry an indication of the PRACH adaptation parameters. Accordingly, the communication apparatus 100 may obtain the indication and respective one or more PRACH adaptation parameters and use said parameters to determine the PRACH resource occasion in step S114. On the other hand, if the short message indicator is not equal to 00 (No in step S113), the communication apparatus 100 determines that the reserved bits do not indicate the one or more PRACH adaptation parameters and, for example, the paging DCI serves the purpose of transmitting the TRS availability indication.

The approach of embodiment 1 allows for decoupling of the TRS availability indication and the adaptation of additional PRACH resources. That is embodiment 1 avoids the TRS availability indication and indication of the one or more PRACH adaptation parameters competing for the same bits of the paging DCI. Further, embodiment 1 allows the communication apparatus 100 to know which field is required to be decoded in order to obtain the necessary information about the adaptation of additional PRACH resources.

### Embodiment 2

In an exemplary embodiment 2, a communication apparatus 100, which may be part of a communication system 1 as described above, receives a paging DCI from a base station 200 in a cell/cells configured with TRS and/or additional PRACH resources.

In the embodiment 2, in contrast to embodiment 1, a SIB indication may indicate the reserved bits in the paging DCI to be used for an indication of the additional PRACH resources. As explained above, the SIB may be any SIB (e.g. SIB1, etc.).

If the SIB indicates that the paging DCI does not indicate the one or more PRACH adaptation parameters, the communication apparatus 100 may assume that the paging DCI is being used for TRS availability indication and not for PRACH adaptation.

Upon reception of the paging DCI, the communication apparatus 100 may determine, based on the indication of the SIB, whether the reserved bits in the paging DCI are to be decoded in order to obtain PRACH adaptation information, namely an indication of the one or more PRACH adaptation parameters.

For example, the communication apparatus 100 may exhibit a configuration as described above in connection with Fig. 4.

The communication apparatus 100 comprises a transceiver 110 which, in operation, receives an indication regarding adaptation of resources for a physical random access channel, PRACH, via a system information block, SIB. The indication indicates whether or not a paging downlink control information, DCI, indicates one or more PRACH adaptation parameters, and, if so, a dedicated field of the paging DCI other than a short message field as an information portion of the paging DCI, the information portion indicating the one or more PRACH adaptation parameters. The circuitry 120, in operation, if the paging DCI indicates the one or more PRACH adaptation parameters, determines the one or more PRACH adaptation parameters based on the indication, and determines resource occasions of the PRACH based on the one or more PRACH adaptation parameters. The transceiver 110, in operation, performs transmission, reception, and/or monitoring of the PRACH on the determined resource occasions.

**Fig. 8** illustrates the steps of a method for a communication apparatus according to embodiment 2. Previous to step S211, the communication apparatus 100 receives a SIB including an indication as to whether or not a paging DCI indicates the one or more PRACH adaptation parameters. In step S211, the communication apparatus 100 receives the paging DCI from the base station 200. Further, the communication apparatus 100 checks the indication of the SIB in step S212 and determines in step S213 whether or not the indicator included in the SIB indicates that the paging DCI indicates PRACH adaptation parameters. If the paging DCI includes a respective indication (Yes in step S213), the communication apparatus 100 determines that the reserved bits carry the indication of the PRACH adaptation parameters. Accordingly, the communication apparatus 100 may obtain the indication and respective one or more PRACH adaptation parameters and use said parameters to determine the PRACH resource occasion in step S214. On the other hand, if the SIB does indicates that the paging DCI does not carry an indication of the PRACH adaptation parameters (No in step S213), the communication apparatus 100 determines that the reserved bits do not indicate the one or more PRACH adaptation parameters and, for example, the paging DCI serves the purpose of transmitting the TRS availability indication.

The approach of embodiment 2 allows for decoupling of the TRS availability indication and the adaptation of additional PRACH resources. That is, embodiment 2 avoids the TRS availability indication and indication of the one or more PRACH adaptation parameters competing for the same bits of the paging DCI. Further, embodiment 2 allows the communication apparatus 100 to know which field is required to be decoded in order to obtain the necessary information about the adaptation of additional PRACH resources. Further, the implementation of embodiment 2 does not make use of the short message indicator of the paging DCI.

### Embodiment 3

In exemplary embodiment 3, a communication apparatus 100, which may be part of a communication system 1 as described above, receives a paging DCI from a base station 200 in a cell/cells configured with TRS and/or additional PRACH resources.

In embodiment 3, the short message indicator of the paging DCI may indicate the reserved bits in the paging DCI to be used for an indication of the additional PRACH resources, e.g. via the bits of the short message indicator being 00.

If the short message indicator does not carry this value (e.g. 00), the communication apparatus 100 may assume that the paging DCI is being used for TRS availability indication and not for PRACH adaptation.

Further, one or more unused bits in the short message field (e.g. bit 5) may indicate that paging information is carried by the paging DCI as well.

Upon reception of the paging DCI, the communication apparatus 100 may determine, based on the indication, whether the reserved bits in the paging DCI are to be decoded in order to obtain PRACH adaptation information, namely an indication of the one or more PRACH adaptation parameters. Further, the communication apparatus 100 may determine if paging information is also contained in the paging DCI.

For example, the communication apparatus 100 may exhibit a configuration as described above in connection with Fig. 4.

The communication apparatus 100 comprises a transceiver 110 which, in operation, receives a paging DCI including an indication regarding adaptation of resources for a physical random access channel, PRACH. The indication includes a first indication and a second indication, wherein the first indication is included in a short message indicator field of the paging DCI and indicates whether or not a paging downlink control information, DCI, indicates one or more PRACH adaptation parameters, and, if so, a dedicated field of the paging DCI other than a short message field as an information portion of the paging DCI, the information portion indicating the one or more PRACH adaptation parameters. The second indication is included in a short message field of the paging DCI and indicates paging. The circuitry 120, in operation, if the paging DCI indicates the one or more PRACH adaptation parameters, determines the one or more PRACH adaptation parameters based on the indication, and determines resource occasions of the PRACH based on the one or more PRACH adaptation parameters. The transceiver 110, in operation, performs transmission, reception, and/or monitoring of the PRACH on the determined resource occasions.

The approach of embodiment 3 allows for decoupling of the TRS availability indication and the adaptation of additional PRACH resources. That is embodiment 3 avoids the TRS availability indication and indication of the one or more PRACH adaptation parameters competing for the same bits of the paging DCI. Further, embodiment 3 allows the communication apparatus 100 to know which field is required to be decoded in order to obtain the necessary information about the adaptation of additional PRACH resources. In addition, embodiment 3 allows for joint transmission of PRACH adaptation information (e.g. the indication of the one or more PRACH adaptation parameters) and paging in the same paging DCI.

### Embodiment 4

In exemplary embodiment 4, a communication apparatus 100, which may be part of a communication system 1 as described above, receives a paging DCI from a base station 200 in a cell/cells configured with TRS and/or additional PRACH resources.

In embodiment 4, the short message indicator of the paging DCI may indicate the unused bits in the short message field in the paging DCI to be used for an indication of the additional PRACH resources, e.g. via the bits of the short message indicator being 00.

If the short message indicator does not carry this value (e.g. 00), the communication apparatus 100 may assume that the paging DCI is being used for TRS availability indication and not for PRACH adaptation.

Upon reception of the paging DCU, the communication apparatus 100 may determine, based on the indication, whether the bits in the short message field in the paging DCI are to be decoded in order to obtain PRACH adaptation information, namely an indication of the one or more PRACH adaptation parameters.

For example, the communication apparatus 100 may exhibit a configuration as described above in connection with Fig. 4.

The communication apparatus 100 comprises a transceiver 110 which, in operation, receives a paging DCI including an indication regarding adaptation of resources for a physical random access channel, PRACH. The indication is included in a short message indicator field of the paging DCI and indicates whether or not a paging downlink control information, DCI, indicates one or more PRACH adaptation parameters, and, if so, a short message field of the paging DCI as an information portion of the paging DCI, the information portion indicating the one or more PRACH adaptation parameters. The circuitry 120, in operation, if the paging DCI indicates the one or more PRACH adaptation parameters, determines the one or more PRACH adaptation parameters based on the indication, and determines resource occasions of the PRACH based on the one or more PRACH adaptation parameters. The transceiver 110, in operation, performs transmission, reception, and/or monitoring of the PRACH on the determined resource occasions.

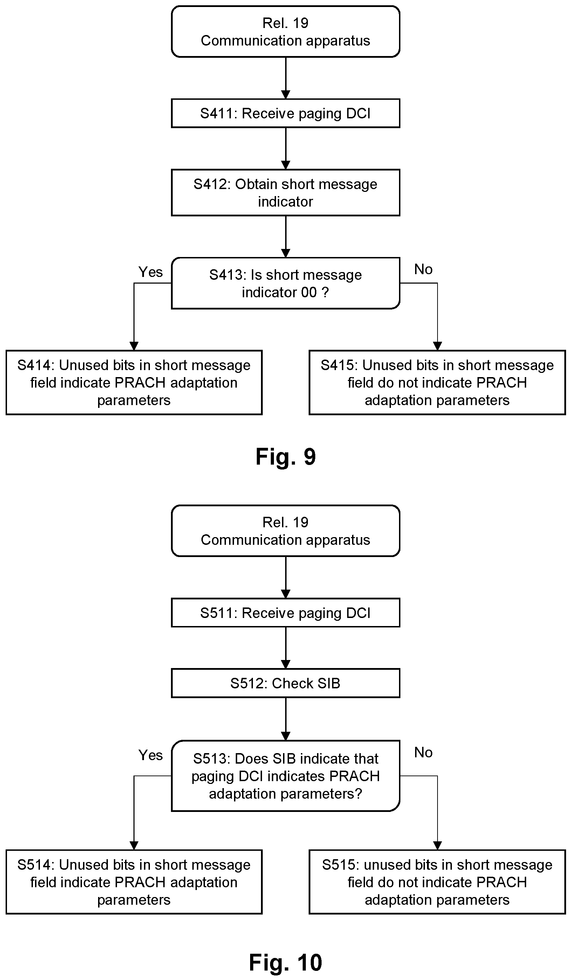

**Fig. 9** illustrates the steps of a method for a communication apparatus according to embodiment 1. In step S411, the communication apparatus 100 receives the paging DCI from the base station 200. Further, the communication apparatus 100 obtains the short message indicator from the paging DCI in step S412 and determines in step S113 whether or not the short message indicator is 00. If the short message indicator is 00 (Yes in step S413), the communication apparatus 100 determines that bits in the short message field carry an indication of the PRACH adaptation parameters. Accordingly, the communication apparatus 100 may obtain the indication and respective one or more PRACH adaptation parameters and use said parameters to determine the PRACH resource occasion in step S414. On the other hand, if the short message indicator is not equal to 00 (No in step S413), the communication apparatus 100 determines that the reserved bits do not indicate the one or more PRACH adaptation parameters and, for example, the paging DCI serves the purpose of transmitting the TRS availability indication.

The approach of embodiment 4 allows for decoupling of the TRS availability indication and the adaptation of additional PRACH resources. That is embodiment 4 avoids the TRS availability indication and indication of the one or more PRACH adaptation parameters competing for the same bits of the paging DCI.

### Embodiment 5

In a exemplary embodiment 5, a communication apparatus 100, which may be part of a communication system 1 as described above, receives a paging DCI from a base station 200 in a cell/cells configured with TRS and/or additional PRACH resources.

In embodiment 5, in contrast to embodiment 4, a SIB indicates bits of the short message field in the paging DCI to be used for an indication of the additional PRACH resources. As explained above, the SIB may be any SIB (e.g. SIB1, etc.).

If the SIB indicates that the paging DCI does not indicate the one or more PRACH adaptation parameters, the communication apparatus 100 may assume that the paging DCI is being used for TRS availability indication and not for PRACH adaptation.

Upon reception of the paging DCI, the communication apparatus 100 may determine, based on the indication of the SIB, whether the bits in the short message field in the paging DCI are to be decoded in order to obtain PRACH adaptation information, namely an indication of the one or more PRACH adaptation parameters.

For example, the communication apparatus 100 may exhibit a configuration as described above in connection with Fig. 4.

The communication apparatus 100 comprises a transceiver 110 which, in operation, receives an indication regarding adaptation of resources for a physical random access channel, PRACH, via a system information block, SIB. The indication indicates whether or not a paging downlink control information, DCI, indicates one or more PRACH adaptation parameters, and, if so, a short message field of the paging DCI as an information portion of the paging DCI, the information portion indicating the one or more PRACH adaptation parameters. The circuitry 120, in operation, if the paging DCI indicates the one or more PRACH adaptation parameters, determines the one or more PRACH adaptation parameters based on the indication, and determines resource occasions of the PRACH based on the one or more PRACH adaptation parameters. The transceiver 110, in operation, performs transmission, reception, and/or monitoring of the PRACH on the determined resource occasions.

**Fig. 10** illustrates the steps of a method for a communication apparatus according to embodiment 5. Previous to step S511, the communication apparatus 100 receives a SIB including an indication as to whether or not a paging DCI indicates the one or more PRACH adaptation parameters. In step S511, the communication apparatus 100 receives the paging DCI from the base station 200. Further, the communication apparatus 100 checks the indication of the SIB in step S512 and determines in step S513 whether or not the indicator included in the SIB indicates that the paging DCI indicates PRACH adaptation parameters. If the paging DCI includes a respective indication (Yes in step S513), the communication apparatus 100 determines that the short message field carries the indication of the PRACH adaptation parameters. Accordingly, the communication apparatus 100 may obtain the indication and respective one or more PRACH adaptation parameters and use said parameters to determine the PRACH resource occasion in step S514. On the other hand, if the SIB does indicates that the paging DCI does not carry an indication of the PRACH adaptation parameters (No in step S513), the communication apparatus 100 determines that the short message field does not indicate the one or more PRACH adaptation parameters and, for example, the paging DCI serves the purpose of transmitting the TRS availability indication.

The approach of embodiment 5 allows for decoupling of the TRS availability indication and the adaptation of additional PRACH resources. That is, embodiment 5 avoids the TRS availability indication and indication of the one or more PRACH adaptation parameters competing for the same bits of the paging DCI. Further, embodiment 5 allows the communication apparatus 100 to know which field is required to be decoded in order to obtain the necessary information about the adaptation of additional PRACH resources. Further, the implementation of embodiment 5 does not make use of the short message indicator of the paging DCI.

### Embodiment 6

In exemplary embodiment 6, a communication apparatus 100, which may be part of a communication system 1 as described above, receives a paging DCI from a base station 200 in a cell/cells configured with TRS and/or additional PRACH resources.

In embodiment 6, the short message indicator of the paging DCI may indicate bits of the short message field in the paging DCI to be used for an indication of the additional PRACH resources, e.g. via the bits of the short message indicator being 00.

If the short message indicator does not carry this value (e.g. 00), the communication apparatus 100 may assume that the paging DCI is being used for TRS availability indication and not for PRACH adaptation.

Further, one or more unused bits in the short message field (e.g. bit 5) may indicate that paging information is carried by the paging DCI as well.

Upon reception of the paging DCI, the communication apparatus 100 may determine, based on the indication, whether the reserved bits in the paging DCI are to be decoded in order to obtain PRACH adaptation information, namely an indication of the one or more PRACH adaptation parameters. Further, the communication apparatus 100 may determine if paging information is also contained in the paging DCI, by decoding the bits of the short message field.

For example, the communication apparatus 100 may exhibit a configuration as described above in connection with Fig. 4.

The communication apparatus 100 comprises a transceiver 110 which, in operation, receives a paging DCI including an indication regarding adaptation of resources for a physical random access channel, PRACH. The indication includes a first indication and a second indication, wherein the first indication is included in a short message indicator field of the paging DCI and indicates whether or not a paging downlink control information, DCI, indicates one or more PRACH adaptation parameters, and, if so, a short message field of the paging DCI as an information portion of the paging DCI, the information portion indicating the one or more PRACH adaptation parameters. The second indication is included in the short message field of the paging DCI and indicates paging. The circuitry 120, in operation, if the paging DCI indicates the one or more PRACH adaptation parameters, determines the one or more PRACH adaptation parameters based on the indication, and determines resource occasions of the PRACH based on the one or more PRACH adaptation parameters. The transceiver 110, in operation, performs transmission, reception, and/or monitoring of the PRACH on the determined resource occasions.

The approach of embodiment 6 allows for decoupling of the TRS availability indication and the adaptation of additional PRACH resources. That is embodiment 6 avoids the TRS availability indication and indication of the one or more PRACH adaptation parameters competing for the same bits of the paging DCI. Further, embodiment 6 allows the communication apparatus 100 to know which field is required to be decoded in order to obtain the necessary information about the adaptation of additional PRACH resources. In addition, embodiment 6 allows for joint transmission of PRACH adaptation information (e.g. the indication of the one or more PRACH adaptation parameters) and paging in the same paging DCI.

### Embodiment 7

In embodiments 1 to 6 described above, the indication of the PRACH adaptation parameters is included in the paging DCI either in the short message field (e.g. by one or more of the unused bits 5 to 8 as illustrate din Table 1) or in a dedicated field other than the short message field, e.g. the reserved bits field as illustrated in Table 1. However, the present disclosure is not limited thereto, and the indication of the PRACH adaptation parameters may be included in the short message field and a dedicated field other than the short message field, e.g. the reserved bits field of Table 1.

In other words, both of reserved bits and unused bits in the short message may be utilized to carry information on adaptation of additional PRACH resources.

In a first variation, the short message indicator (e.g. the value 00) indicates that both reserved bits and unused bits in the short message field in the paging DCI are to be used for the indication of the one or more PRACH adaptation parameters.

In a second variation, a SIB indicates that both the reserved bits and unused bits in the short message field in the paging DCI are to be used for the indication of the one or more PRACH adaptation parameters.

If the short message indicator or the SIB, respectively, does not indicate that the indication of PRACH adaptation parameters is carried by the paging DCI, the communication apparatus 100 may assume that the DCI is used for transmitting the TRS availability indication, but not a PRACH adaptation parameter indication.

Upon reception of the paging DCI, the communication apparatus 100 may determine, based on the indication, whether the reserved bits field as well as the short message field are to be decoded in order to obtain the PRACH adaptation parameter indication.

The communication apparatus 100 comprises a transceiver 110 which, in operation, receives an indication regarding adaptation of resources for a physical random access channel, PRACH, wherein the indication indicates whether or not a paging downlink control information, DCI, indicates one or more PRACH adaptation parameters, and an information portion of the paging DCI, the information portion indicating the one or more PRACH adaptation parameters. The transceiver 110 may receive the indication as part of the paging DCI or via a SIB. If the communication apparatus 100 received the indication via a SIB, the transceiver 110, in operation, further receives the paging DCI. If the indication is received as part of the paging DCI, the indication may be included in a short message indicator field of the paging DCI. The information portion includes a short message field of the paging DCI and a dedicated field of the paging DCI other than the short message field (e.g. the reserved bits field as illustrated in Table 1). The circuitry 130, in operation, if the paging DCI indicates the one or more PRACH adaptation parameters, determines the one or more PRACH adaptation parameters based on the indication, and determines resource occasions of the PRACH based on the one or more PRACH adaptation parameter. Further, the transceiver 110, in operation, performs transmission, reception, and/or monitoring of the PRACH on the determined resource occasions.

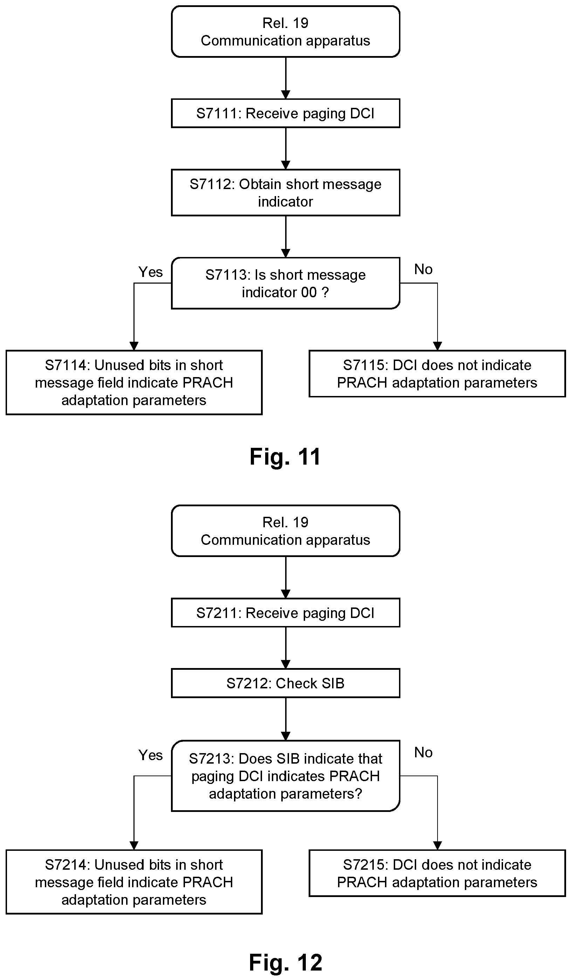

**Figs. 10** **and** **11** illustrates the steps of a method for a communication apparatus according to embodiment 7. Whereas Fig. 10 shows the steps of the first variation, wherein the indication is transmitted as part of the paging DCI, Fig. 11 illustrates the steps of the second variation, wherein the indication is transmitted separately from the paging DCI via a SIB.

In the latter case, previous to step S7211, the communication apparatus 100 receives a SIB including an indication as to whether or not a paging DCI indicates the one or more PRACH adaptation parameters.

In each of steps S7111 and S7211, the communication apparatus 100 receives the paging DCI from the base station 200.

Further, the communication apparatus 100 checks the indication of the SIB in step S7212 or the information included in the short message indicator in step S7112 and determines in steps S7113 and S7213 whether or not the indicator (included in the short message indicator field or the SIB) indicates that the paging DCI indicates PRACH adaptation parameters. If the paging DCI includes a respective indication (Yes in steps S7113, S7213), the communication apparatus 100 determines that the short message field as well as the dedicated field other than the short message field (e.g. reserved bits field) carries the indication of the PRACH adaptation parameters. Accordingly, the communication apparatus 100 may obtain the indication and respective one or more PRACH adaptation parameters and use said parameters to determine the PRACH resource occasion in steps S7114, S7214. On the other hand, if the indication indicates that the paging DCI does not carry an indication of the PRACH adaptation parameters (No in step S7113, S7213), the communication apparatus 100 determines that the short message field does not indicate the one or more PRACH adaptation parameters and, for example, the paging DCI serves the purpose of transmitting the TRS availability indication in step S7115, S7215.

With this approach of embodiment 7, the TRS availability indication and the indication of PRACH adaptation parameters may be decoupled in that a paging DCI either indicates TRS or PRACH adaptation. Therefore, TRS and PRACH adaptation competing for the same information portion within the paging DCI may be avoided. Further, embodiment 7 allows the communication apparatus 100 to know which fields are to be decoded in order to obtain information about PRACH adaptation. Further, when the indication is received via SIB, the reserved value of the short message field indicator is not utilized. By using the short message field bits as well as bits of the reserved bits field, the paging DCI provides more bits to be used for the indication of the PRACH adaptation. In other words, the paging DCI may carry more information as in a case where only the short message field or the reserved bits field is utilized. In this respect, it is again noted that the paging DCI may carry the PRACH adaptation parameters itself or carry a pointer into a set of pre-obtained PRACH adaptation parameters, for example.

### Embodiment 8

According to embodiment 8, the paging DCI carries an indication indicating that the paging DCI indicates the one or more PRACH adaptations parameters. In other words, the paging DCI only carries the PRACH adaptation information as its payload. That is, the paging DCI carries the indication regarding adaptation of resources for the PRACH and the indication of the one or more PRACH adaptation parameters, but no other payload like a short message or the TRS availability indication.

The communication apparatus 100, which may be part of a communication system 1 as described above, receives a paging DCI from a base station 200 in a cell/cells configured with TRS and/or additional PRACH resources.

In a first variation, the short message indicator (e.g. the value 00) indicates that the paging DCI indicates the one or more PRACH parameters and may indicate that the indication of said PRACH adaptation parameters is included in the short message field and/or the reserved bits field of the paging DCI.

In a second variation, a SIB indicates that the paging DCI indicates the one or more PRACH parameters and may indicate that the indication of said PRACH adaptation parameters is included in the short message field and/or the reserved bits field of the paging DCI.

Upon reception of the paging DCI, the communication apparatus 100 may determine, based on the indication, whether the reserved bits and/or the short message field in the paging DCI are to be decoded in order to obtain PRACH adaptation information, namely the indication of the one or more PRACH adaptation parameters.

For example, the communication apparatus 100 may exhibit a configuration as described above in connection with Fig. 4.

That is, the communication apparatus 100 comprising a transceiver 110 which, in operation, receives an indication regarding adaptation of resources for a physical random access channel, PRACH. The indication may be received via a system information block, SIB, or as part of a paging DCI in a short message indicator field of said paging DCI. The indication indicates whether or not a paging downlink control information, DCI, indicates one or more PRACH adaptation parameters, and that the paging DCI only carries the indication of the one or more PRACH adaptation parameters. The indication may also indicate the information portion of the paging DCI that carries the indication of the one or more PRACH adaptation parameters. If the indication regarding the adaptation of resources for the PRACH is received via SIB, the transceiver 110, in operation, receives the paging DCI. Further, the circuitry 130, in operation, if the paging DCI indicates the one or more PRACH adaptation parameters, determines the one or more PRACH adaptation parameters based on the indication, and determines resource occasions of the PRACH based on the one or more PRACH adaptation parameters. Further, the transceiver 110, in operation, performs transmission, reception, and/or monitoring of the PRACH on the determined resource occasions.

With the approach of embodiment 8, the TRS availability indication and the indication of PRACH adaptation parameters are decoupled from each other, avoiding that the TRS availability indication and the PRACH adaptation parameter indication compete for the same bits. Further, the communication apparatus 100 may know which field(s) is/are to be decoded to obtain the information of the PRACH adaptation parameters. Further, the communication apparatus 100 is aware that the paging DCI carries only the PRACH adaptation information. If the indication is received via SIB, reserved bits of the short message indicator field are not utilized.

### Embodiment 9

In embodiment 8, the paging DCI indicates the one or more PRACH adaptation parameters only. According to embodiment 9, to the contrary, the paging DCI carries an indication indicating that the paging DCI indicates the one or more PRACH adaptations parameters and a short message. In other words, the paging DCI carries the PRACH adaptation information and a short message as its payload. That is, the paging DCI carries the indication regarding adaptation of resources for the PRACH, the indication of the one or more PRACH adaptation parameters and a short message, but no other payload like a the TRS availability indication.

The communication apparatus 100, which may be part of a communication system 1 as described above, receives a paging DCI from a base station 200 in a cell/cells configured with TRS and/or additional PRACH resources.

In a first variation, the short message indicator (e.g. the value 00) indicates that the paging DCI indicates the one or more PRACH parameters and a short message. The indicator 00 may indicate that the indication of said PRACH adaptation parameters is included in the (unused bits of the) short message field and/or the reserved bits field of the paging DCI.

In a second variation, a SIB indicates that the paging DCI indicates the one or more PRACH parameters and the short message. It may further indicate that the indication of said PRACH adaptation parameters is included in the short message field and/or the reserved bits field of the paging DCI.

Upon reception of the paging DCI, the communication apparatus 100 may determine, based on the indication, whether the reserved bits and/or the short message field in the paging DCI are to be decoded in order to obtain PRACH adaptation information, namely the indication of the one or more PRACH adaptation parameters.

For example, the communication apparatus 100 may exhibit a configuration as described above in connection with Fig. 4.

That is, the communication apparatus 100 comprising a transceiver 110 which, in operation, receives an indication regarding adaptation of resources for a physical random access channel, PRACH. The indication may be received via a system information block, SIB, or as part of a paging DCI in a short message indicator field of said paging DCI. The indication indicates whether or not a paging downlink control information, DCI, indicates one or more PRACH adaptation parameters, and that the paging DCI carries the indication of the one or more PRACH adaptation parameters and a short message. The indication may also indicate the information portion of the paging DCI that carries the indication of the one or more PRACH adaptation parameters. If the indication regarding the adaptation of resources for the PRACH is received via SIB, the transceiver 110, in operation, receives the paging DCI. Further, the circuitry 130, in operation, if the paging DCI indicates the one or more PRACH adaptation parameters, determines the one or more PRACH adaptation parameters based on the indication, and determines resource occasions of the PRACH based on the one or more PRACH adaptation parameters. Further, the transceiver 110, in operation, performs transmission, reception, and/or monitoring of the PRACH on the determined resource occasions.

With the approach of embodiment 9, the TRS availability indication and the indication of PRACH adaptation parameters are decoupled from each other, avoiding that the TRS availability indication and the PRACH adaptation parameter indication compete for the same bits. Further, the communication apparatus 100 may know which field(s) is/are to be decoded to obtain the information of the PRACH adaptation parameters. Further, embodiment 9 allows for a joint indication of PRACH adaptation information and the short message. If the indication is received via SIB, reserved bits of the short message indicator field are not utilized.

### Embodiment 10

Whereas the indication regarding the adaptation of resources for the PRACH in embodiments 8 and 9 indicates that the paging DCI indicates the one or more PRACH adaptation parameters only and that the paging DCI indicates the PRACH adaptation parameters and a short message, respectively, the indication in embodiment 10 indicates that the paging DCI indicates the one or more PRACH adaptation parameters and paging. In other words, the indication indicates the presence of the PRACH adaptation parameter indication as well as that the paging DCI indicates paging, but does not include a short message or the TRS availability indication.

The communication apparatus 100, which may be part of a communication system 1 as described above, receives a paging DCI from a base station 200 in a cell/cells configured with TRS and/or additional PRACH resources.

In a first variation, the short message indicator (e.g. the value 00) indicates that the paging DCI indicates the one or more PRACH parameters and a short message. The indicator 00 may indicate that the indication of said PRACH adaptation parameters is included in the (unused bits of the) short message field and/or the reserved bits field of the paging DCI.

In a second variation, a SIB indicates that the paging DCI indicates the one or more PRACH parameters and the short message. It may further indicate that the indication of said PRACH adaptation parameters is included in the short message field and/or the reserved bits field of the paging DCI.

Upon reception of the paging DCI, the communication apparatus 100 may determine, based on the indication, whether the reserved bits and/or the short message field in the paging DCI are to be decoded in order to obtain PRACH adaptation information, namely the indication of the one or more PRACH adaptation parameters. Further, the communication apparatus 100 is aware of the paging indicated by the paging DCI.

For example, the communication apparatus 100 may exhibit a configuration as described above in connection with Fig. 4.

That is, the communication apparatus 100 comprising a transceiver 110 which, in operation, receives an indication regarding adaptation of resources for a physical random access channel, PRACH. The indication may be received via a system information block, SIB, or as part of a paging DCI in a short message indicator field of said paging DCI. The indication indicates whether or not a paging downlink control information, DCI, indicates one or more PRACH adaptation parameters, and that the paging DCI carries the indication of the one or more PRACH adaptation parameters. Further, the indication indicates paging of the communication apparatus 100. The indication may also indicate the information portion of the paging DCI that carries the indication of the one or more PRACH adaptation parameters. If the indication regarding the adaptation of resources for the PRACH is received via SIB, the transceiver 110, in operation, receives the paging DCI. Further, the circuitry 130, in operation, if the paging DCI indicates the one or more PRACH adaptation parameters, determines the one or more PRACH adaptation parameters based on the indication, and determines resource occasions of the PRACH based on the one or more PRACH adaptation parameters. Further, the transceiver 110, in operation, performs transmission, reception, and/or monitoring of the PRACH on the determined resource occasions.

With the approach of embodiment 10, the TRS availability indication and the indication of PRACH adaptation parameters are decoupled from each other, avoiding that the TRS availability indication and the PRACH adaptation parameter indication compete for the same bits. Further, the communication apparatus 100 may know which field(s) is/are to be decoded to obtain the information of the PRACH adaptation parameters. Further, embodiment 10 allows for a joint indication of PRACH adaptation information and paging. If the indication is received via SIB, reserved bits of the short message indicator field are not utilized.

### Embodiment 11

The indication regarding adaptation of resources for a PRACH in embodiment 11 indicates that the paging DCI indicates the one or more PRACH adaptation parameters, a short message, and paging. In other words, the indication indicates the presence of the PRACH adaptation parameter indication as well as that the paging DCI indicates paging, and a short message, but does not include the TRS availability indication.

The communication apparatus 100, which may be part of a communication system 1 as described above, receives a paging DCI from a base station 200 in a cell/cells configured with TRS and/or additional PRACH resources.

In a first variation, the short message indicator (e.g. the value 00) indicates that the paging DCI indicates the one or more PRACH parameters and a short message. The indicator 00 may indicate that the indication of said PRACH adaptation parameters is included in the (unused bits of the) short message field and/or the reserved bits field of the paging DCI.

In a second variation, a SIB indicates that the paging DCI indicates the one or more PRACH parameters and the short message. It may further indicate that the indication of said PRACH adaptation parameters is included in the short message field and/or the reserved bits field of the paging DCI.

Upon reception of the paging DCI, the communication apparatus 100 may determine, based on the indication, whether the reserved bits and/or the short message field in the paging DCI are to be decoded in order to obtain PRACH adaptation information, namely the indication of the one or more PRACH adaptation parameters. Further, the communication apparatus 100 is aware of the paging indicated by the paging DCI and of the short message indicated by the paging DCI.

For example, the communication apparatus 100 may exhibit a configuration as described above in connection with Fig. 4.

That is, the communication apparatus 100 comprising a transceiver 110 which, in operation, receives an indication regarding adaptation of resources for a physical random access channel, PRACH. The indication may be received via a system information block, SIB, or as part of a paging DCI in a short message indicator field of said paging DCI. The indication indicates whether or not a paging downlink control information, DCI, indicates one or more PRACH adaptation parameters, and that the paging DCI carries the indication of the one or more PRACH adaptation parameters. Further, the indication indicates paging of the communication apparatus 100 as well as a short message. The indication may also indicate the information portion of the paging DCI that carries the indication of the one or more PRACH adaptation parameters. If the indication regarding the adaptation of resources for the PRACH is received via SIB, the transceiver 110, in operation, receives the paging DCI. Further, the circuitry 130, in operation, if the paging DCI indicates the one or more PRACH adaptation parameters, determines the one or more PRACH adaptation parameters based on the indication, and determines resource occasions of the PRACH based on the one or more PRACH adaptation parameters. Further, the transceiver 110, in operation, performs transmission, reception, and/or monitoring of the PRACH on the determined resource occasions.

With the approach of embodiment 11, the TRS availability indication and the indication of PRACH adaptation parameters are decoupled from each other, avoiding that the TRS availability indication and the PRACH adaptation parameter indication compete for the same bits. Further, the communication apparatus 100 may know which field(s) is/are to be decoded to obtain the information of the PRACH adaptation parameters. Further, embodiment 10 allows for a joint indication of PRACH adaptation information, paging, and a short message. If the indication is received via SIB, reserved bits of the short message indicator field are not utilized.

### Further variations

In the above description, specific implementation examples are given as embodiments 1 to 11 with respective variations. However, the present disclosure is not limited to these specific embodiments. In particular, aspects described in the framework of these embodiments may be suitably combined. In particular, the approach of embodiments 8 to 11, namely that the indication may indicate that the paging DCI carries only the indication of the PRACH adaptation parameters, that the paging DCI indicates the one or more PRACH adaptation parameters and a short message, that the paging DCI indicates the one or more PRACH adaptation parameters and paging, and that the paging DCI indicates the one or more PRACH adaptation parameters, paging, and a short message, may be combined with any of embodiments 1 to 7.

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

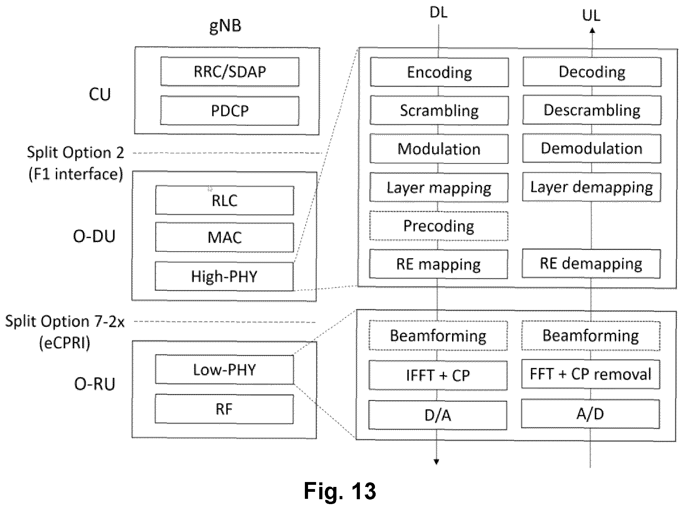

**Fig. 13** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD - Subband non-overlapping full duplex

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### User Equipment

A terminal or user terminal or user device or mobile station or mobile node is referred to in the LTE and NR as a user equipment (UE). This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Further variations

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, provided is a communication apparatus, comprising a transceiver which, in operation, receives an indication regarding adaptation of resources for a physical random access channel, PRACH, wherein the indication indicates (i) whether or not a paging downlink control information, DCI, indicates one or more PRACH adaptation parameters, and/or (ii) an information portion of the paging DCI, the information portion indicating the one or more PRACH adaptation parameters; and receives the paging DCI; and circuitry which, in operation, if the paging DCI indicates the one or more PRACH adaptation parameters, determines the one or more PRACH adaptation parameters based on the indication, and determines resource occasions of the PRACH based on the one or more PRACH adaptation parameters, wherein the transceiver, in operation, performs transmission, reception, and/or monitoring of the PRACH on the determined resource occasions.

In an embodiment, the indication indicates (i) that the paging DCI indicates the one or more PRACH adaptation parameters, (ii) that the paging DCI indicates the one or more PRACH adaptation parameters and a short message, (iii) that the paging DCI indicates the one or more PRACH adaptation parameters and paging, or (iv) that the paging DCI indicates the one or more PRACH adaptation parameters, a short message, and paging.

In an embodiment, the transceiver, in operation, receives the indication separate from the paging DCI or as a part of the paging DCI.

In an embodiment, the transceiver, in operation, receives the indication via the paging DCI or via a system information block, SIB.

For example, the indication is included in a short message indicator field of the paging DCI.

In an embodiment, the indication includes a first indication and a second indication, the first indication is included in a short message indicator field of the paging DCI and indicates the information portion indicating the one or more PRACH adaptation parameters, and the second indication is included in a short message field of the paging DCI and indicates paging.

In an embodiment, the indication indicates that the information portion is included in (i) a short message field of the paging DCI, and/or (ii) a dedicated field of the paging DCI other than the short message field.

In an embodiment, the paging DCI carries no tracking reference signal, TRS, availability indication if the paging, DCI, indicates at least the one or more PRACH adaptation parameters.

In an embodiment, the paging DCI carries a tracking reference signal, TRS, availability indication if the indication indicates that the paging, DCI, does not indicate the one or more PRACH adaptation parameters; and the circuitry, in operation, obtains the TRS availability indication from the paging DCI.

For example, the communication apparatus is served by a base station via a network energy saving, NES, cell.

For example, the paging DCI is formatted according to a DCI format 1_0 with cyclic redundancy check, CRC, scrambled by Paging Radio Network Temporary Identifier, P-RNTI.

According to a second aspect, provided is a base station, comprising circuitry which, in operation, determines adaptation of resources for a physical random access channel, PRACH; and a transceiver which, in operation, transmits an indication regarding adaptation of the resources for the PRACH, wherein the indication indicates (i) whether or not a paging downlink control information, DCI, indicates one or more PRACH adaptation parameters, and/or (ii) an information portion of the paging DCI, the information portion indicating the one or more PRACH adaptation parameters, and transmits the paging DCI.

In an embodiment, the indication indicates (i) that the paging DCI indicates the one or more PRACH adaptation parameters, (ii) that the paging DCI indicates the one or more PRACH adaptation parameters and a short message, (iii) that the paging DCI indicates the one or more PRACH adaptation parameters and paging, or (iv) that the paging DCI indicates the one or more PRACH adaptation parameters, a short message, and paging.

In an embodiment, the transceiver, in operation, transmits the indication separately from the paging DCI or as a part of the paging DCI.

In an embodiment, the transceiver, in operation, transmits the indication via the paging DCI or via a system information block, SIB.

For example, the indication is included in a short message indicator field of the paging DCI.

In an embodiment, the indication includes a first indication and a second indication, the first indication is included in a short message indicator field of the paging DCI and indicates the information portion indicating the one or more PRACH adaptation parameters, and the second indication is included in a short message field of the paging DCI and indicates paging.

In an embodiment, the indication indicates that the information portion is included in (i) a short message field of the paging DCI, and/or (ii) a dedicated field of the paging DCI other than the short message field.

In an embodiment, the paging DCI carries no tracking reference signal, TRS, availability indication if the paging, DCI, indicates at least the one or more PRACH adaptation parameters.

In an embodiment, the paging DCI carries a tracking reference signal, TRS, availability indication if the indication indicates that the paging, DCI, does not indicate the one or more PRACH adaptation parameters.

For example, the base station serves a communication apparatus via a network energy saving, NES, cell.

For example, the paging DCI is formatted according to a DCI format 1_0 with cyclic redundancy check, CRC, scrambled by Paging Radio Network Temporary Identifier, P-RNTI.

According to a third aspect, provided is a communication method for a communication apparatus, comprising receiving an indication regarding adaptation of resources for a physical random access channel, PRACH, wherein the indication indicates (i) whether or not a paging downlink control information, DCI, indicates one or more PRACH adaptation parameters, and/or (ii) an information portion of the paging DCI, the information portion indicating the one or more PRACH adaptation parameters; receiving the paging DCI; and if the paging DCI indicates the one or more PRACH adaptation parameters, determining the one or more PRACH adaptation parameters based on the indication; determining resource occasions of the PRACH based on the one or more PRACH adaptation parameters; and transmitting, receiving, and/or monitoring of the PRACH on the determined resource occasions.

In an embodiment, the indication indicates (i) that the paging DCI indicates the one or more PRACH adaptation parameters, (ii) that the paging DCI indicates the one or more PRACH adaptation parameters and a short message, (iii) that the paging DCI indicates the one or more PRACH adaptation parameters and paging, or (iv) that the paging DCI indicates the one or more PRACH adaptation parameters, a short message, and paging.

In an embodiment, the indication is received separate from the paging DCI or as a part of the paging DCI.

In an embodiment, the indication is received via the paging DCI or via a system information block, SIB.

For example, the indication is included in a short message indicator field of the paging DCI.

In an embodiment, the indication includes a first indication and a second indication, the first indication is included in a short message indicator field of the paging DCI and indicates the information portion indicating the one or more PRACH adaptation parameters, and the second indication is included in a short message field of the paging DCI and indicates paging.

In an embodiment, the indication indicates that the information portion is included in (i) a short message field of the paging DCI, and/or (ii) a dedicated field of the paging DCI other than the short message field.

In an embodiment, the paging DCI carries no tracking reference signal, TRS, availability indication if the paging, DCI, indicates at least the one or more PRACH adaptation parameters.

In an embodiment, the paging DCI carries a tracking reference signal, TRS, availability indication if the indication indicates that the paging, DCI, does not indicate the one or more PRACH adaptation parameters; and the method comprises obtaining the TRS availability indication from the paging DCI.

For example, the communication apparatus is served by a base station via a network energy saving, NES, cell.

For example, the paging DCI is formatted according to a DCI format 1_0 with cyclic redundancy check, CRC, scrambled by Paging Radio Network Temporary Identifier, P-RNTI.

According to a fourth aspect, provided is a communication method for a base station, comprising determining adaptation of resources for a physical random access channel, PRACH; transmitting an indication regarding adaptation of the resources for the PRACH, wherein the indication indicates (i) whether or not a paging downlink control information, DCI, indicates one or more PRACH adaptation parameters, and/or (ii) an information portion of the paging DCI, the information portion indicating the one or more PRACH adaptation parameters; and transmitting the paging DCI.

In an embodiment, the indication indicates (i) that the paging DCI indicates the one or more PRACH adaptation parameters, (ii) that the paging DCI indicates the one or more PRACH adaptation parameters and a short message, (iii) that the paging DCI indicates the one or more PRACH adaptation parameters and paging, or (iv) that the paging DCI indicates the one or more PRACH adaptation parameters, a short message, and paging.

In an embodiment, the indication is transmitted separately from the paging DCI or as a part of the paging DCI.

In an embodiment, the indication is transmitted via the paging DCI or via a system information block, SIB.

For example, the indication is included in a short message indicator field of the paging DCI.

In an embodiment, the indication includes a first indication and a second indication, the first indication is included in a short message indicator field of the paging DCI and indicates the information portion indicating the one or more PRACH adaptation parameters, and the second indication is included in a short message field of the paging DCI and indicates paging.

In an embodiment, the indication indicates that the information portion is included in (i) a short message field of the paging DCI, and/or (ii) a dedicated field of the paging DCI other than the short message field.

In an embodiment, the paging DCI carries no tracking reference signal, TRS, availability indication if the paging, DCI, indicates at least the one or more PRACH adaptation parameters.

In an embodiment, the paging DCI carries a tracking reference signal, TRS, availability indication if the indication indicates that the paging, DCI, does not indicate the one or more PRACH adaptation parameters.

For example, the base station serves a communication apparatus via a network energy saving, NES, cell.

For example, the paging DCI is formatted according to a DCI format 1_0 with cyclic redundancy check, CRC, scrambled by Paging Radio Network Temporary Identifier, P-RNTI.

According to a fourth aspect, provided is a non-transient computer-readable storage medium storing instructions, which, when executed by one or more computers, causes the one or more computers to perform any one of the methods described above.

According to a fifth aspect, provided is a computer program comprising instructions, which, when the program is executed by a computer, cause the computer to carry out the steps of any one of the methods described above.

## Claims

1. A communication apparatus, comprising
a transceiver which, in operation,
receives an indication regarding adaptation of resources for a physical random access channel, PRACH, wherein the indication indicates
• whether or not a paging downlink control information, DCI, indicates one or more PRACH adaptation parameters, and/or
• an information portion of the paging DCI, the information portion indicating the one or more PRACH adaptation parameters; and
receives the paging DCI; and
circuitry which, in operation, if the paging DCI indicates the one or more PRACH adaptation parameters,
determines the one or more PRACH adaptation parameters based on the indication, and
determines resource occasions of the PRACH based on the one or more PRACH adaptation parameters, wherein
the transceiver, in operation, performs transmission, reception, and/or monitoring of the PRACH on the determined resource occasions.

2. The communication apparatus according to claim 1, wherein the indication indicates
• that the paging DCI indicates the one or more PRACH adaptation parameters,
• that the paging DCI indicates the one or more PRACH adaptation parameters and a short message,
• that the paging DCI indicates the one or more PRACH adaptation parameters and paging, or
• that the paging DCI indicates the one or more PRACH adaptation parameters, a short message, and paging.

3. The communication apparatus according to claim 1 or 2, wherein
the transceiver, in operation, receives the indication separate from the paging DCI or as a part of the paging DCI.

4. The communication apparatus according to any one of claims 1 to 3, wherein
the transceiver, in operation, receives the indication via the paging DCI or via a system information block, SIB.

5. The communication apparatus according to claim 1 or 2, wherein
the indication is included in a short message indicator field of the paging DCI.

6. The communication apparatus according to claim 1 or 2, wherein
the indication includes a first indication and a second indication,
the first indication is included in a short message indicator field of the paging DCI and indicates the information portion indicating the one or more PRACH adaptation parameters, and
the second indication is included in a short message field of the paging DCI and indicates paging.

7. The communication apparatus according to any one of claims 1 to 6, wherein
the indication indicates that the information portion is included in
• a short message field of the paging DCI, and/or
• a dedicated field of the paging DCI other than the short message field.

8. The communication apparatus according to any one of claims 1 to 7, wherein
the paging DCI carries no tracking reference signal, TRS, availability indication if the paging, DCI, indicates at least the one or more PRACH adaptation parameters.

9. The communication apparatus according to any one of claims 1 to 8, wherein
the paging DCI carries a tracking reference signal, TRS, availability indication if the indication indicates that the paging, DCI, does not indicate the one or more PRACH adaptation parameters; and
the circuitry, in operation, obtains the TRS availability indication from the paging DCI.

10. The communication apparatus according to any one of claims 1 to 9, wherein
the communication apparatus is served by a base station via a network energy saving, NES, cell.

11. The communication apparatus according to any one of claims 1 to 10, wherein
the paging DCI is formatted according to a DCI format 1_0 with cyclic redundancy check, CRC, scrambled by Paging Radio Network Temporary Identifier, P-RNTI.

12. A base station, comprising
circuitry which, in operation, determines adaptation of resources for a physical random access channel, PRACH; and
a transceiver which, in operation,
transmits an indication regarding adaptation of the resources for the PRACH, wherein the indication indicates
• whether or not a paging downlink control information, DCI, indicates one or more PRACH adaptation parameters, and/or
• an information portion of the paging DCI, the information portion indicating the one or more PRACH adaptation parameters, and
transmits the paging DCI.

13. The base station according to claim 12, wherein
the transceiver, in operation, transmits the indication separately from the paging DCI or as a part of the paging DCI.

14. A communication method for a communication apparatus, comprising
receiving an indication regarding adaptation of resources for a physical random access channel, PRACH, wherein the indication indicates
• whether or not a paging downlink control information, DCI, indicates one or more PRACH adaptation parameters, and/or
• an information portion of the paging DCI, the information portion indicating the one or more PRACH adaptation parameters;
receiving the paging DCI; and
if the paging DCI indicates the one or more PRACH adaptation parameters,
determining the one or more PRACH adaptation parameters based on the indication;
determining resource occasions of the PRACH based on the one or more PRACH adaptation parameters; and
transmitting, receiving, and/or monitoring of the PRACH on the determined resource occasions.

15. A communication method for a base station, comprising
determining adaptation of resources for a physical random access channel, PRACH;
transmitting an indication regarding adaptation of the resources for the PRACH, wherein the indication indicates
• whether or not a paging downlink control information, DCI, indicates one or more PRACH adaptation parameters, and/or
• an information portion of the paging DCI, the information portion indicating the one or more PRACH adaptation parameters; and
transmitting the paging DCI.
